# EUROPÄISCHE PATENTANMELDUNG

(11) **EP 4 786 796 A2**
(43) Veröffentlichungstag der Anmeldung: **05.08.2026**
(21) Anmeldenummer: 26186274.2
(22) Anmeldetag: 05.03.2020
(51) Int. Cl.: F04D 29/38

(54) **ANTRIEBSEINHEIT MIT EINER KÜHLEINHEIT**

(30) Priorität: 04.04.2019 EP 19167304
(62) Teilanmeldung aus: 20710858.0
(71) Anmelder: Innomotics GmbH, 90441 Nürnberg (DE)
(72) Erfinder: DEEG, Christian, 90518 Altdorf (DE); KUHN, Harald, 90482 Nürnberg (DE); MAIDORN, Mischa, 90547 Stein (DE); MÄCHTEL, Stefan, 91056 Erlangen (DE); TISCHMACHER, Hans, 91207 Lauf an der Pegnitz (DE)
(74) Vertreter: Michalski Hüttermann & Partner mbB

(57) **Zusammenfassung**

Die Erfindung betrifft einen Antrieb (1) mit
- zumindest einer dynamoelektrischen rotatorischen Maschine (2),
- zumindest einem elektronischen Anbauteil (13), das in einer geschlossenen Gehäuseanordnung positioniert ist,
- zumindest einer Lüftereinheit (15),
- wobei diese Komponenten axial hintereinander angeordnet sind, indem das elektronische Anbauteil (13) axial zwischen dynamoelektrischen rotatorischen Maschine (2) und Lüftereinheit (15) angeordnet ist,
- wobei zumindest zwischen Gehäuseanordnung und Lüftereinheit und/oder zwischen Gehäuseanordnung und Lagerschild der dynamoelektrischen rotatorischen Maschine (2) und/oder zwischen Gehäuseanordnung und einer Welle (9) der dynamoelektrischen rotatorischen Maschine (2) Freiräume vorgesehen sind,
- wobei im Betrieb der Lüftereinheit (15) aufgrund eines Hauptströmungspfades Lüfterhaube (16), Oberfläche des elektronischen Anbauteils (13) und des Motorgehäuses (10)) und mittels des Venturieffekts die Freiräume ebenfalls mit einem Kühlluftstrom beaufschlagbar sind, **dadurch gekenn zeichnet** , dass
- die Lüftereinheit als ein Zwei-Zonen-Lüfter ausgeführt ist,
- wobei der Zwei-Zonen-Lüfter eine erste Zone im Bereich im Bereich der Nabe aufweist, die im Wesentlichen eine axiale Luftströmung generiert und eine zweite radial daran anschließende Zone aufweist, die im Wesentlichen eine radiale Luftströmung generiert,
- wobei zwei unabhängig voneinander angeordnete Lüfterflügelsätze
- radiale und axiale Lüfterflügel - vorgesehen sind,
- wobei der Zwei-Zonen-Lüfter eine Nabe (25) aufweist, die mit der Welle (9) drehfest verbunden ist und von der sich radial angeordnete Lüfterschaufeln (23) erstrecken, die mit ihrer Schmalseite an einer Scheibe (29) angeordnet sind,
- wobei um die Nabe (25) angeordnet sich ein Durchlass (24) befindet, in dem Lüfterelemente (26) angeordnet sind, die über ein Gelenk (27) mit einem elastischen Bereich mit ausreichender Rückstellkraft verfügen und,
- dass Sensoren, wie Schwingungssensoren, Temperatursensoren, Feuchtigkeitssensoren etc. im Antrieb (1) angeordnet sind, die ihre erfassten Daten leitungsgebunden oder über drahtlose Verbindungen an zumindest eine Regeleinheit übermitteln

## Beschreibung

Die Erfindung betrifft eine Antriebseinheit mit einer dynamoelektrischen Maschine zumindest einem elektronischen Anbauteil und zumindest einer Kühleinheit.

Derartige Antriebseinheiten sind beispielsweise aus der DE 198 12 729 A1 bekannt. Die Erfindung beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Die Erfindung beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe. Ausgehend davon liegt der Erfindung die Aufgabe zugrunde, eine kompakte Antriebseinheit zu schaffen, die eine ausreichende Kühlung der Antriebseinheit gewährleistet.

Die Lösung der gestellten Aufgabe gelingt durch einen Antrieb mit
- zumindest einer dynamoelektrischen rotatorischen Maschine,
- zumindest einem elektronischen Anbauteil, das in einer geschlossenen Gehäuseanordnung positioniert ist,
- zumindest einer Lüftereinheit,
- wobei diese Komponenten axial hintereinander angeordnet sind, indem das elektronische Anbauteil axial zwischen dynamoelektrischen rotatorischen Maschine und Lüftereinheit angeordnet ist,
- wobei zumindest zwischen Gehäuseanordnung und Lüftereinheit und/oder zwischen Gehäuseanordnung und Lagerschild der dynamoelektrischen rotatorischen Maschine und/oder zwischen Gehäuseanordnung und/oder einer Welle der dynamoelektrischen rotatorischen Maschine Freiräume vorgesehen sind,
- wobei im Betrieb der Lüftereinheit aufgrund eines Hauptströmungspfades (Lüfterhaube, Oberfläche des elektronischen Anbauteils und des Motorgehäuses) und mittels des Venturieffekts die Freiräume ebenfalls mit einem Kühlluftstrom beaufschlagbar sind.

Erfindungsgemäß ist nunmehr eine Kühlwirkung über den Hauptströmungspfad als auch über diese Freiräume vorgesehen, in denen aufgrund des Venturieffekts ebenfalls eine Luftströmung generiert wird, die zur Kühlung der benachbarten Antriebskomponenten beiträgt. Damit werden Wärmestauungen in diesen Freiräumen vermieden.

Diese Kühlungsvariante erhält eine Unterstützung, indem die Lüftereinheit als ein Zwei-Zonen-Lüfter ausgeführt ist, der mit einer Welle drehfest verbunden ist. Damit werden im Betrieb der dynamoelektrischen rotatorischen Maschine zwei voneinander unabhängig verlaufende Luftströme erzeugt. Somit kann der Antrieb erfindungsgemäß, insbesondere in axialer Richtung noch kompakter ausgeführt werden.

Der Zwei-Zonen-Lüfter weist eine erste Zone im Bereich im Bereich der Nabe des Lüfters auf, die im Wesentlichen eine axiale Luftströmung generiert. Radial daran schließt sich an dem Lüfter eine zweite Zone an, die im Wesentlichen eine radiale Luftströmung generiert. Diese radiale Luftströmung generiert den Hauptströmungspfad, wobei von der angesaugten Luft ca. 80 bis 90% in den Hauptströmungspfad gelangen.

Die Freiräume und/oder die den Hauptströmungspfad flankierenden Komponenten weisen oberflächenvergrößernde Strukturen auf, die im Wesentlichen parallel zu den jeweiligen Strömungspfaden ausgerichtet sind. So sind dies an einem Lagerschild und die Gehäuseanordnung insbesondere radial verlaufende Rippen. Damit wird die Kühleffizienz gesteigert.

Weitere Maßnahmen zur Kühleffizienzsteigerung ergeben sich dadurch, dass ein die dynamoelektrische rotatorische Maschine umgebendes Gehäuse zumindest am Außenumfang abschnittsweise Rippen aufweist. Eine zusätzliche Lüfterhaube, die auch als Leitvorrichtung des Hauptströmungspfades dient, verstärkt den Venturieffekt, indem sie sich zumindest über das elektronische Anbauteil und ca. 30% der axialen Länge des Gehäuses der dynamoelektrischen rotatorischen Maschine ausgehend von einem BS-Lagerschild erstreckt.

Das elektronische Anbauteil weist Komponenten auf, die als Steller oder Umrichter ausgeführt sind.

Damit ergibt sich ein sehr kompakter und leistungsfähiger Antrieb, dessen Komponenten, insbesondere die elektronischen Anbauteile über die Gehäuseanordnung, als auch die dynamoelektrische rotatorische Maschine, wie Stator und Rotor und die dazwischen auftretenden Freiräumen kühlt.

Die Gehäuseanordnung ist aus vergleichsweise thermisch gut leitfähigem Material, wie beispielsweise Aluminium oder Aluminiumlegierungen.

Die Gehäuseanordnung kann zylindrisch oder auch trichterförmig ausgebildet sein, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Die Gehäuseanordnung weist eine Aussparung auf, durch die eine Welle ragt, die u.a. die Antriebswelle der Kühleinheit, insbesondere eines Lüfters bildet.

Die Steller- oder Umrichterkomponenten können insbesondere auch ausschließlich im zylindrischen Abschnitt der Gehäuseanordnung angeordnet sein, in diesem Fall wirkt der sich axial verjüngenden Abschnitt als Wärmekapazität, die eine wärmepuffernde Wirkung aufweist. Damit wird auch bei wechselnden Betriebszuständen eine ausreichende Kühlung des Antriebs gewährleistet.

Der Rotor der dynamoelektrischen rotatorischen Maschine wird u.a. auch über die Welle gekühlt. Außerdem wird Wärme des Rotors auch an den Innenraum der dynamoelektrischen rotatorischen Maschine abgegeben, sodass sich die Lagerschilde, Lager und Gehäuse dadurch ebenfalls erwärmen können. Dieser Wärmeeintrag aus den Freiräumen wird durch die das Gehäuse und die Lagerschilde umströmende Luft, insbesondere durch die Luftströmung des Venturieffekts abgeführt.

Der Stator der dynamoelektrischen rotatorischen Maschine erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Gehäusemantel eingeschrumpft, um einen vergleichsweise guten Wärmeübergang vom Blechpaket des Stators auf das Gehäuse und die Gehäuserippen zu erhalten. Von dort führt dann zum überwiegenden Teil der Hauptluftstrom die Wärme ab.

Die als Eigenlüfter ausgeführte Kühleinheit generiert im Betrieb der dynamoelektrischen rotatorischen Maschine einen oder mehrere Kühlluftströme, der radial und/oder axial entlang zumindest der Oberfläche der Gehäuseanordnung und die Freiräume strömt.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs,

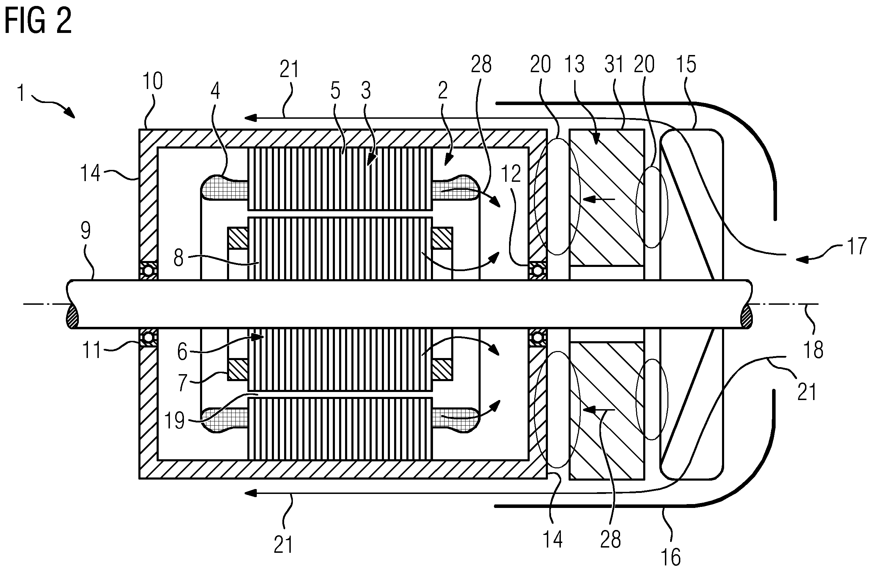

- FIG 2: einen prinzipiellen Längsschnitt eines erfindungsgemäßen Antriebs mit Bereichen, wo sich Wärmeansammlungen entwickeln können,
- FIG 3: einen prinzipiellen Längsschnitt eines Antriebs mit Kühlluftströmen,
- FIG 4: Vorderansicht des Zwei-Zonen-Lüfters,
- Fig 5: Seitenansicht des Zwei-Zonen-Lüfters,
- FIG 6: Vorderansicht des Zwei-Zonen-Lüfter mit Lüfterelementen,
- FIG 7: perspektivische Darstellung des Zwei-Zonen-Lüfters,
- FIG 8: Vorderansicht des Zwei-Zonen-Lüfters mit Schnittebene,
- FIG 9: geschnittene Seitenansicht des Zwei-Zonen-Lüfters,
- FIG 10: Detaildarstellung.

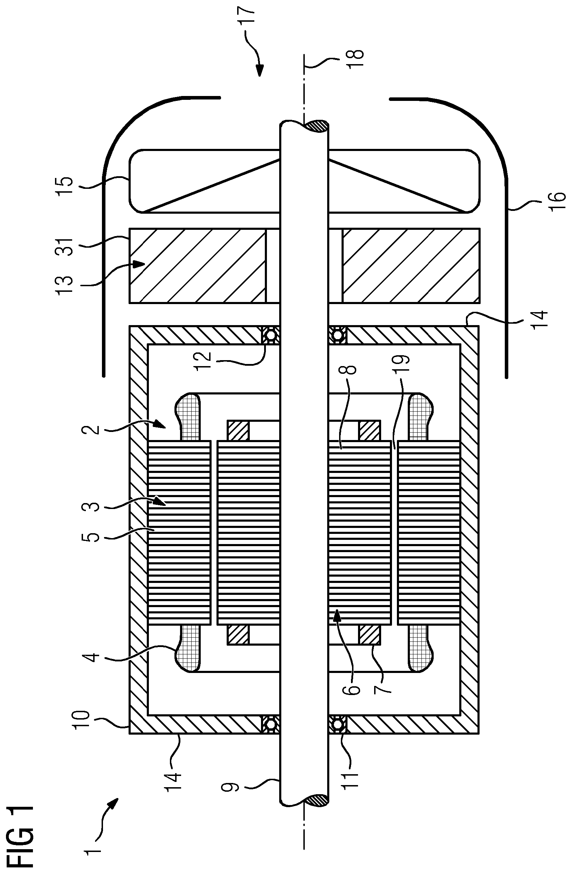

FIG 1 zeigt einen Antrieb 1 mit einer dynamoelektrischen rotatorischen Maschine 2, die einen Stator 3 mit einem Blechpaket 5 aufweist. In dem Blechpaket 5 des Stators 3 ist, einem Luftspalt 19 zugewandt, ein Wicklungssystem angeordnet, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle 9 um eine Achse 18 führt.

Die Welle 9 ist in zwei Lagern drehfest gehalten, einem AS-Lager 11 (der anzutreibenden Arbeitsmaschine zugewandt) und einem BS-Lager 12 (der anzutreibenden Arbeitsmaschine abgewandt). Die dynamoelektrische rotatorische Maschine 2 ist von einem Gehäuse 10 umgeben, das an den Stirnseiten von Lagerschilden 14 begrenzt ist. Axial von der BS-Seite beabstandet und einen Freiraum bildend, befindet sich ein elektronisches Anbauteil 13, das zumindest Komponenten eines Umrichters oder Stellers beinhaltet. Das elektronische Anbauteil 13 ist ortsfest und nicht mit der Welle 9 drehfest verbunden. Das elektronische Anbauteil 13 ist mechanisch mit dem BS-Lagerschild 14 und/oder mit dem Gehäuse 10 verbunden und in einer Gehäuseanordnung 31 untergebracht. Ebenso werden unter Einhaltung der jeweiligen Schutzklasse die Versorgungsleitungen und/oder die Sensorleitungen über das Lagerschild und/oder das Gehäuse 10 verlegt.

Axial daran schließt sich ein Lüfter 15, insbesondere Zwei-Zonen-Lüfter an, der wiederum drehfest mit der Welle 9 verbunden ist und Kühlluftströme generiert, die zumindest zum Teil durch eine Lüfterhaube 16 geführt sind. Die Zuluft wird über eine Ansaugöffnung 17 der Lüfterhaube 16 dem Lüfter 15 zugeführt.

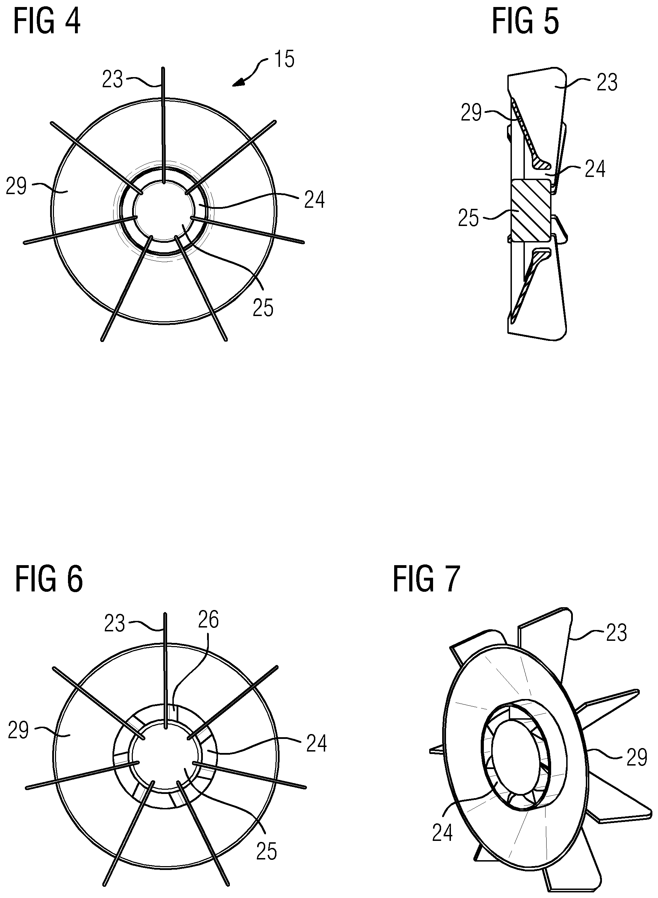

Bei dem Antrieb 1, insbesondere zwischen dem elektronischen Anbauteil 13 und dem zugewandten Lagerschild 14, und/oder zwischen einer Deckscheibe 22 eines Lüfters 15 gemäß FIG 4 und dem elektronischen Anbauteil 13, also in den Freiräumen treten im Betrieb des Antriebs 1 Wärmeansammlungen 20 auf. Es kann somit - ergänzend zur eigenen Wärmeentwicklung - auf das elektronische Anbauteil 13 von beiden axialen Seiten ein zusätzlicher Wärmeeintrag erfolgen. So führt Verlustwärme aus dem Umrichter oder Steller, als auch Wärme aus der Maschine 2 über das Lagerschild 14 zu diesen Wärmeansammlungen 20. Die Wärme aus der Maschine 2 setzt sich u.a. aus der Verlustwärme von Stator 3 und Rotor 6 zusammen. Diese heizt zusätzlich die benachbarten Lager 11, 12 auf, was den Schmierstoff der Lager 11, 12 beeinträchtigt, den Schmiereigenschaften schadet und zu verkürzten Nachschmierfristen der Lager 11, 12 führt.

Die Wärme wird auch über die Welle 9, insbesondere aus dem Rotor 6 der dynamoelektrischen rotatorischen Maschine 2 transportiert und dem Lüfter 15 zugeführt, der dabei als Wärmeabgabeelement fungiert. Der Lüfter 15 - als Eigenlüfter - erzeugt normalerweise nur im Betrieb der dynamoelektrischen rotatorischen Maschine 2 einen Kühlluftstrom, da Lüfter 15 und Welle 9 drehfest gekoppelt sind.

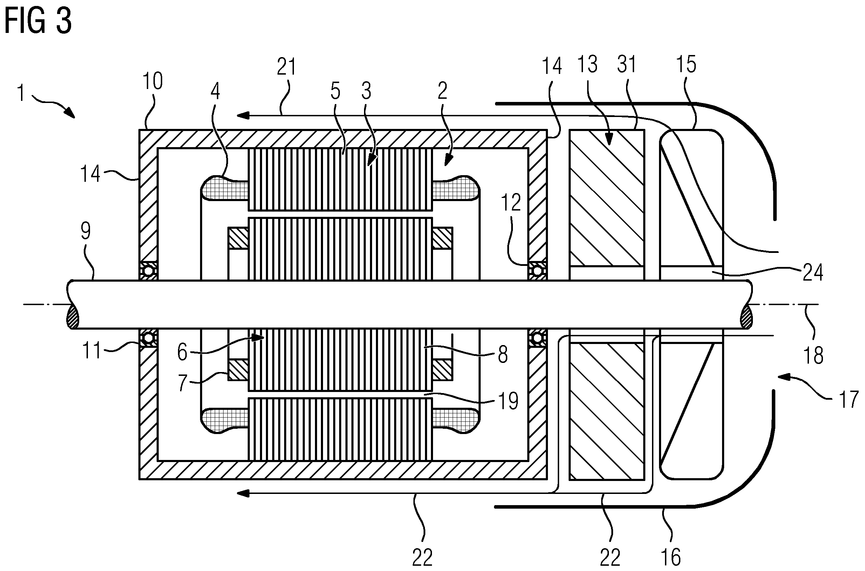

FIG 3 zeigt nunmehr beispielhaft die Kühlluftströme, die durch eigens vorgesehene Freiräume bzw. Kühlmittelpfade insbesondere zur Verringerung der Wärmeansammlung 20 führen.

Zur Verdeutlichung des Verlaufs der Kühlluftströme zeigt FIG 3 oberhalb des Achse 18 einen Hauptkühlluftstrom 21 (Lüfterhaube 16, Oberfläche des elektronischen Anbauteils 13 und Gehäuse 10) und unterhalb der Achse 18, die u.a. durch den Venturieffekt und/oder einer ersten Zone des Lüfters verursachten Kühlluftströme 22. In der Realität sind diese Kühlluftströme 21, 22 am gesamten Umfang vorhanden.

FIG 4 zeigt in einer Frontansicht einen Zwei-Zonen-Lüfter, mit einer Nabe 25, die mit der Welle 9 drehfest verbunden ist. Des Weiteren erstrecken sich ausgehend von der Nabe 25 radial angeordnete Lüfterschaufeln 23, die mit ihrer Schmalseite gemäß FIG 5 an einer Scheibe 29 angeordnet sind. Um die Nabe 25 angeordnet befindet sich ein Durchlass 24.

FIG 6 zeigt Lüfterelemente 26, die in dem Durchlass 24 angeordnet sind und die vor allem eine axiale Luftströmung generieren, die den oben beschriebenen Venturieffekt unterstützt.

FIG 7 zeigt die Anordnung der Lüfterelemente 26 in einer perspektivischen Darstellung.

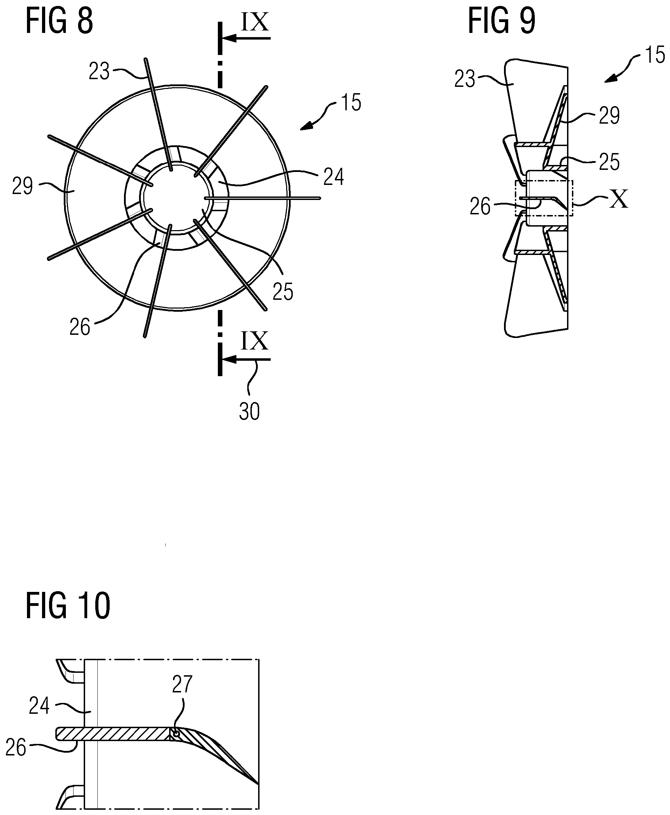

FIG 8 zeigt den Schnitt IX durch einen Zwei-Zonen-Lüfter, wobei FIG 9 diese Schnittansicht zeigt. Im Durchlass 24 befinden sich Lüfterelemente 26, die über ein Gelenk 27 gemäß FIG 10 verfügen. Damit kann der Zwei-Zonen-Lüfter unabhängig von der Drehrichtung axial fördern. Das Gelenk 27 weist im elastischen Bereich eine ausreichende Rückstellkraft auf, um eine axiale Förderung beizubehalten.

Durch den erfindungsgemäßen Einsatz des Zwei-Zonen-Lüfters 15, wird auch in den Freiräumen - unterstützt durch den Venturieffekt - eine ausreichende Kühlung gewährleistet. Die Wärmeansammlungen 20 werden somit vermieden.

Um auch bei Niedrigdrehzahl der dynamoelektrischen rotatorischen Maschine 2 eine ausreichende Kühlung der Komponenten des Antriebs 1 zu erhalten, kann der mit der Welle 9 gekoppelte Zwei-Zonen-Lüfter auch noch einen Fremdlüfter aufweisen.

Die Innenseite des zylindrischen Abschnitts und/oder des sich axial verjüngenden Abschnitt der Gehäuseanordnung 31 ist polygonal ausgeführt, um Steller- oder Umrichterkomponenten des elektronischen Anbauteils 13 direkt an der Innenseite der Gehäuseanordnung 31 anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt als Wärmekapazität, der eine thermisch puffernde Wirkung aufweist. Dieser Abschnitt ist dann als Vollmaterial ausgeführt.

Der Antrieb 1 bzw. die Antriebseinheit ist grundsätzlich kompakt aufgebaut. Dabei können die vorab beschriebenen und die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung 31 angeordnet. Eine Kühlung des Antriebs 1 und seiner jeweiligen Abschnitte/Teile erfolgt durch eine oder mehrere Kühleinheiten, die als Flüssigkeitskühlung (Kühlmantel an Gehäuseanordnung 31 und/oder am Gehäuse 10 der dynamoelektrische rotatorische Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung 31 angeordnet ist, so dass eine axiale Reihenfolge von Lüfter 15, Gehäuseanordnung 31 des elektronischen Anbauteils 13 und dynamoelektrischer rotatorischer Maschine 2 vorliegt.

Der Lüfter 15 kann auch als eine Lüftereinheit aus einem oder mehreren Eigen- oder auch Fremdlüftern aufgebaut sein, die auch zumindest teilweise an oder in einer Lüfterhaube 16 integriert sein können.

Zur Verbesserung des Kühleffekts sind oberflächenvergrößernde Maßnahmen an der Gehäuseanordnung 31 und/oder dem Gehäuse 10 der dynamoelektrischen rotatorischen Maschine 2 vorgesehen. Dabei sind dort Rippen, Noppen oder zusätzliche Wärmekapazitäten in Form von Gehäuseerweiterung vorgesehen, die Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild 14 und der Gehäuseanordnung Kühlkanäle geschaffen, die durch dementsprechende Gestaltung und einem Hauptluftstrom einen zur Kühlung betragenden Venturieffekt in den Aussparungen erzielen.

Die Gehäuseanordnung 31 kann dabei auch trichterförmig ausgebildet, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Um die Oberfläche der Gehäuseanordnung 31 des elektronischen Anbauteils 13 zu vergrößern, weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung 31 anordnen zu können. Damit wird eine vergleichsweise thermisch gute Anbindung gewährleistet.

Die Steller- oder Umrichterkomponenten können insbesondere auch ausschließlich im zylindrischen Abschnitt der Gehäuseanordnung 31 angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe erfüllt. Damit können axial kürzere Lüfter 15 eingesetzt werden, um so eine kompaktere Bauweise des Antriebs 1 zu erhalten.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf führen. Der Innenlüfter ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten und dementsprechend angeordneten Magneten innerhalb des elektronischen Anbauteils 13 beispielsweise auf einer Nabe des Innenlüfters.

Alternativ kann der Innenlüfter seine Antriebsenergie auch dem Drehfeld der dynamoelektrischen rotatorischen Maschine 2, insbesondere dessen Oberschwingungen entnehmen.

Die elektrische Antriebsenergie des Innenlüfter kann auch direkt den Steller- oder Umrichterkomponenten innerhalb des elektronischen Anbauteils 13 entnommen werden.

Die Innenlüfter 20 sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch die beiden Lüfter 15, 20 kann auch zumindest zeitweise auch ein Redundanzbetrieb des Antriebs 1 aufrechterhalten werden, sofern einer der beiden Lüfter 15, 20 ausfallen sollte.

Zur Regelung kann der Antrieb 1 auch eine Regeleinheit aufweisen, die Daten unterschiedlichster Sensoren u.a. Temperatursensoren, Schwingungssensoren, Schallsensoren erhält. Die Temperatursensoren sind bei diesem Antrieb 1 an den relevanten Einbauorten angeordnet. So sind Temperatursensoren für die Außenluft, für das elektronische Anbauteil 13, der Leistungshalbleiter im elektronischen Anbauteil 13, für das oder die Lager 11,12, für das Wicklungssystem und/oder den Wickelkopf 4, für den Innenraum der Maschine 2, als auch für das Gehäuse 10 und die Umgebung vorgesehen.

Sensoren, die in dem Antrieb 1, also der Maschine 2 und/oder dem elektronischen. Anbauteil 13 vorgesehen werden, sind kabelgebunden oder kabellos mit einer Regeleinheit verbunden, die in der elektronischen Anbaueinheit 13 oder am Gehäuse 10 der Maschine 2, insbesondere in einem Klemmenkasten oder in der Maschine 2 angeordnet ist.

Schwingungssensoren sind an der Welle 9 und oder Gehäuse 10 angebracht. Schallsensoren sind vor allem an schallemittierenden Quellen, wie z.B. Rippen oder Lagerschilden 14 vorgesehen. Des Weiteren sind Drehzahlsensoren zur Regelung des Antriebs 1 vorhanden.

Aus all diesen Daten regelt bzw. steuert die Regeleinheit u.a. die Drehzahl des oder der Fremdlüfters und/oder die Taktfrequenz des Umrichters. D.h. bei besonders hohen Außentemperaturen und/oder geringer Drehzahl der Welle 9 wird der Fremdlüfter temperaturabhängig zugeschaltet. Dabei ist auch die Drehzahl und damit der Volumenstrom des Fremdlüfters 26 steuer- bzw. regelbar.

Die Isttemperatur vorzugsweise des gesamtem Antriebs 1 wird dabei über einen oder mehrere der oben aufgeführten Temperatursensoren erfasst. Zusätzlich ist es möglich über ein Temperaturmodell die erfassten Werte zu verifizieren bzw. über vorgegebene in der Regeleinheit und/oder einer Cloud (beispielsweise über einen digitalen Zwilling) hinterlegte Algorithmen Temperaturen der Antriebskomponenten zu ermitteln, die nicht mit Sensoren versehen sind.

Damit ist ein energieeffizienter Betrieb des Antriebs 1 durchzuführbar und Wartungsintervalle des Antriebs 1 und dessen Komponenten sind außerdem besser planbar, wie z.B. Nachschmierfristen der Lager.

Die Sensoren sind dabei Schwingungssensoren, Temperatursensoren, Feuchtigkeitssensoren etc. Vorteilhafterweise übermitteln die Sensoren, ihre Daten leitungsgebunden oder über drahtlose Verbindungen an die Regeleinheit. Die Daten werden entweder durch direkten Kontakt oder optisch (beispielsweise Infrarot-Temperaturmessung) erfasst.

Die Regeleinheiten unterschiedlicher Antriebe 1 können auch über eine Cloud in Kontakt stehen und dabei vorgebbare Daten ihrer Antriebe austauschen.

Damit ergibt sich ein sehr kompakter und leistungsfähiger Antrieb 1, der aufgrund der Regeleinheit einen thermisch und/oder energieeffizienten Betrieb des Antriebs 1 gewährleistet. Dabei greift die Regeleinheit in die Taktfrequenz, den Aussteuergrad und/oder den Steuerwinkel eines Umrichters des elektronischen Anbauteils ein, ebenso wie beispielsweise in die Drehzahl eines Fremdlüfters. Damit ergibt sich im Hinblick auf thermische grenzen und/oder Energieeffizienz des Antriebs 1 eine optimale und aussteuerbare Verlustaufteilung zwischen den Komponenten der dynamoelektrischen Maschine 2 und den elektronischen Anbauteilen 13. Mittels der Kühleinheiten, zumindest einer Basiskühleinheit, einer Eigenbelüftung 15 und/oder einer Boosterkühleinheit, die insbesondere die Komponenten der dynamoelektrischen rotatorischen Maschine 2, wie Stator und Rotor, als auch die elektronischen Anbauteile 13, wie Leistungs- und Steuerelektronik, Regeleinheit etc. kühlt, wird somit auch ein thermisch steuer- bzw. regelbarer optimaler Betrieb des Antriebs 1 gewährleistet.

Beispielsweise führen bestimmte Einstellungen der Taktfrequenz des Umrichters zu geringeren Verlusten im Umrichter, aber erhöhen die Verluste in der dynamoelektrischen Maschine 2. Umgekehrt können thermisch günstige Einstellungen für die dynamoelektrische Maschine 2 den Umrichter thermisch stärker belasten. Je nachdem welches dieser Teilsysteme des Antriebs 1 noch thermische Reserven aufweist, kann über die Regeleinheit 27 der Umrichter dementsprechend eingestellt werden. Zusätzlich kann die Regeleinheit 27 auch in die Kühlung eingreifen, indem beispielsweise ein oder mehrere Fremdlüfter des Antriebs 1 zu- oder abgeschaltet werden oder mit dementsprechender Drehzahl betrieben werden.

## Patentansprüche

1. Antrieb (1) mit
- zumindest einer dynamoelektrischen rotatorischen Maschine (2),
- zumindest einem elektronischen Anbauteil (13), das in einer geschlossenen Gehäuseanordnung positioniert ist,
- zumindest einer Lüftereinheit (15),
- wobei diese Komponenten axial hintereinander angeordnet sind, indem das elektronische Anbauteil (13) axial zwischen dynamoelektrischen rotatorischen Maschine (2) und Lüftereinheit (15) angeordnet ist,
- wobei zumindest zwischen Gehäuseanordnung und Lüftereinheit und/oder zwischen Gehäuseanordnung und Lagerschild der dynamoelektrischen rotatorischen Maschine (2) und/oder zwischen Gehäuseanordnung und einer Welle (9) der dynamoelektrischen rotatorischen Maschine (2) Freiräume vorgesehen sind,
- wobei im Betrieb der Lüftereinheit (15) aufgrund eines Hauptströmungspfades Lüfterhaube (16), Oberfläche des elektronischen Anbauteils (13) und des Motorgehäuses (10)) und mittels des Venturieffekts die Freiräume ebenfalls mit einem Kühlluftstrom beaufschlagbar sind,
**dadurch gekennzeichnet, dass**
- die Lüftereinheit als ein Zwei-Zonen-Lüfter ausgeführt ist,
- wobei der Zwei-Zonen-Lüfter eine erste Zone im Bereich im Bereich der Nabe aufweist, die im Wesentlichen eine axiale Luftströmung generiert und eine zweite radial daran anschließende Zone aufweist, die im Wesentlichen eine radiale Luftströmung generiert,
- wobei zwei unabhängig voneinander angeordnete Lüfterflügelsätze - radiale und axiale Lüfterflügel - vorgesehen sind,
- wobei der Zwei-Zonen-Lüfter eine Nabe (25) aufweist, die mit der Welle (9) drehfest verbunden ist und von der sich radial angeordnete Lüfterschaufeln (23) erstrecken, die mit ihrer Schmalseite an einer Scheibe (29) angeordnet sind,
- wobei um die Nabe (25) angeordnet sich ein Durchlass (24) befindet, in dem Lüfterelemente (26) angeordnet sind, die über ein Gelenk (27) mit einem elastischen Bereich mit ausreichender Rückstellkraft verfügen und,
- dass Sensoren, wie Schwingungssensoren, Temperatursensoren, Feuchtigkeitssensoren etc. im Antrieb (1) angeordnet sind, die ihre erfassten Daten leitungsgebunden oder über drahtlose Verbindungen an zumindest eine Regeleinheit übermitteln.

2. Antrieb (1) nach Anspruch 1, **dadurch gekenn-zeichnet**, dass die Daten der Sensoren entweder durch direkten Kontakt oder optisch erfasst werden.

3. Antrieb (1) nach einem der vorhergehenden Ansprüche 1 oder 2, **dadurch gekennzeichnet, dass** die Regeleinheit einen thermisch und/oder energieeffizienten Betrieb des Antriebs (1) gewährleistet, indem sie in die Taktfrequenz, den Aussteuergrad und/oder den Steuerwinkel eines Umrichters des elektronischen Anbauteils (13) eingreift, ebenso wie beispielsweise in die Drehzahl eines Fremdlüfters.

4. Anordnung von Antrieben (1) nach einem der vorhergehenden Ansprüche 1 bis 3, **dadurch gekennzeich** - **net**, dass die Regeleinheiten unterschiedlicher Antriebe (1) über eine Cloud in Kontakt stehen und dabei vorgebbare Daten ihrer Antriebe (1) austauschen.
